# EUROPÄISCHE PATENTSCHRIFT

(11) **EP 1 428 774 B1**
(45) Veröffentlichungstag und Bekanntmachung des Hinweises auf die Patenterteilung: **31.05.2006**
(21) Anmeldenummer: 02027431.2
(22) Anmeldetag: 09.12.2002
(51) Int. Cl.: B65G 25/02, B65G 47/53

(54) **Hubtisch in Förderstrassen für Transporteinrichtungen**
Elevating platform for a transport device in a conveyor track
Table élévatrice pour un dispositif de transport dans une voie de transport

(43) Veröffentlichungstag der Anmeldung: 16.06.2004
(73) Patentinhaber: SIEMENS AKTIENGESELLSCHAFT, 80333 München (DE)
(72) Erfinder: Fernandez, Alejandro, 28015 Madrid (ES); Janssen, Peter, 28035 Madrid (ES); Liebana, Juan, Jose, 28020 Madrid (ES)

(56) Entgegenhaltungen:
- EP-A- 0 451 717
- DE-A- 3 718 822
- DE-A- 3 903 518
- DE-A- 3 917 484
- US-A- 4 600 095
- US-A- 6 155 402

## Beschreibung

Die Erfindung betrifft einen Hubtisch in Förderstraßen für Transporteinrichtungen wie Skids, Paletten, Palettenboxen oder dergleichen Lasten, bestehend aus einem horizontalen am Boden abstützbaren Tragrahmen und einem an diesem Tragrahmen parallel zu diesem heb- und senkbar gelagerten Hubrahmen, dessen Hubantrieb aus vorzugsweise vier den Hubrahmen symmetrisch untergreifenden Hubgliedern besteht, die am Tragrahmen um horizontale Achsen drehbar gelagert sind und synchron von einen gemeinsamen Antriebsmotor drehangetrieben werden, so dass die an jedem Hubglied exzentrisch angeordneten Auflagen für den Hubrahmen zwischen einer tiefsten Stellung in eine höchste Stellung verschwenkbar sind und dabei den Hubrahmen parallel zum Tragrahmen heben und senken.

Aus der EP 0191116 BI ist eine Fördereinrichtung zum Transportieren von Skids bekannt. Die Skids dienen zur Aufnahme von Fahrzeugen, die im Zuge einer Fließfertigung zu den jeweiligen Bearbeitungsstationen befördert werden. Die Fördereinrichtung besteht im wesentlichen aus einer Rollenbahn mit ortsfesten und freilaufenden Rollen für diese Skids und aus Antriebseinheiten, die beispielsweise als an den Längsseiten der Skids angreifende Reibradantriebe oder dergleichen ausgebildet sind. Die Rollen sind gewöhnlich in parallel zur Förderrichtung und voneinander beabstandet angeordneten Längsträgern gelagert, die über Stützen mit dem Boden verbunden sind.

In derartigen Fließfertigungssystemen ist es häufig der Fall, dass sich die Förderwege von verschiedenen Fördereinrichtungen kreuzen. In diesem Fall muss zwangsweise die Rollenbahn unterbrochen werden; die Skids, ggf. einschließlich der darauf transportierten Fahrzeuge, werden, zum Beispiel von einer Hubstation, auf das Niveau einer über den Fahrweg führenden Rollenbahn gefördert und nach Überquerung des Fahrwegs von einer Senkstation wieder auf die weiterführende Rollenbahn abgesetzt.

Die Hub- und Senkstationen werden bekanntermaßen als ein- oder auch beidseitig mit der zu hebenden Last beschickbare Hubtische ausgebildet, wie sie innerhalb von Transportsystemen und Fertigungsstraßen für unterschiedliche Zwecke Verwendung finden und prinzipiell bekannt sind. Ein Hubtisch gemäβ dem Oberbegriff des Anspruchs 1 ist beispielweise aus EP O 451 717 A1 bekannt. So sind in der Automobilindustrie Transportsysteme für Pkw- Karosserien bekannt, bei denen die auf Skids abgesetzten Karosserien über zwei parallele Längsförderer, die z.B. aus Plattenbandförderern bestehen, einem gemeinsamen Querförderer zugeführt werden, der als Stegkettenförderer ausgebildet sein kann. In einer Mittelposition zwischen den beiden Längsförderern weist der Querförderer einen Hubtisch auf, mit dessen Hilfe die Lastpaletten einem anderen Förderer übergeben werden. Der Querförderer weist an den Übergabestellen der Längsförderer und/oder in der Mittelposition jeweils den Hubtisch auf. Die Übergabe der Paletten an den Übergabestationen der Längsförderer erfolgt bei angehobenem Hubtisch, der anschließend für die Mitnahme der Palette durch den Querförderer wieder abgesenkt wird. Der Querförderer befördert dann die Skids in eine andere Position, wo sie auf einen dort befindlichen abgesenkten Kurzhubtisch gelangen. Dieser kann hochgefahren werden, um die Palette dem nachgeschalteten Längsförderer zu übergeben.

Die Hubantriebe bekannter Hubtische werden gewöhnlich synchron von einen gemeinsamen Elektromotor drehangetrieben.

Dazu ist auf den Antriebswellen der Hubglieder jeweils ein Zahnrad angeordnet, die Zahnräder werden über Zahnriemen angetrieben, die über an der Motorausgangsachse angeordnete Riemenscheiben geführt sind. Diese Art Antrieb hat sich als wartungsintensiv und störanfällig erwiesen, nachteilig ist insbesondere der komplizierte und deshalb zeitintensive Ausbau bzw. Austausch der Antriebsglieder. Zudem sind die präzise bearbeiteten Zahnräder und Riemenscheiben in der Herstellung sehr teuer, was im Zusammenhang mit dem unvermeidbaren Verschleiß als unwirtschaftlich empfunden wird.

Aufgabe der vorliegenden Erfindung ist es, den bekannten Hubtisch und insbesondere seinen Hubantrieb so zu verbessern, dass der Verschleiß auf ein Minimum reduziert wird, die Störanfälligkeit verringert und die Herstellkosten reduziert werden, also insgesamt eine wirtschaftlichere Lösung zur Verfügung gestellt wird.

Diese Aufgabe wind durch die Merkmale des Anspruchs 1 gelöst. Die Anwendung des bekannten Schubkurbeltriebes für einen Hubtisch erhöht die Lebensdauer des Antriebes praktisch unbegrenzt. Der Schubkurbeltrieb ist in seiner Konstruktionsart kostengünstiger herzustellen und einfacher zu warten. Die verwendeten Teile sind einfach zu bearbeiten, im Vergleich zu aufwändig bearbeiteten Zahnrädern beim Stand der Technik. Die teuren und verschleißanfälligen Riemen entfallen. Die Kurbel auf der Motorwelle ist ein einfaches, sehr stabiles Bauteil, das sehr kostengünstig herzustellen ist. Als Lager lassen sich konventionelle Bauteile verwenden, die im Handel preisgünstig erhältlich sind. Ebenso einfach ist der auf einer der Hubachsen befestigte Hebel gestaltet, Kurbel und Hebel können aus Vollmaterial ausgeschnittene Formteile sein, die, außer ggf. dem Bohren oder Bearbeiten der Lagersitze oder keine weitere Bearbeitung benötigen.

Die Kopplung der Hebel auf den die Hubglieder betätigenden Drehachsen ermöglicht erst die synchrone Hubbewegung, die Voraussetzung für eine ordnungsgemäße Wirkungsweise des Hubtisches ist. Das lässt sich am Einfachsten mit der erfindungsgemäßen Koppelstange erreichen, einem stabilen aber sehr einfachen Bauteil.

Konstruktiv günstig und weniger aufwändig ist es, wenn einer der Hebel zur Synchronisation der Hubbewegung des Hubrahmens sowohl die Schubkurbel, als auch das einen Ende der Koppelstange lagert.

Die Koppelstange und/oder die Schubstange können als handelsfähiges Rohr ausgebildet sein, wodurch sich eine besonders einfache und stabile Lösung ergibt. Natürlich kann das Rohr sowohl rund als auch als Vierkantrohr ausgeführt werden, aber auch Vollmaterial ist denkbar.

Wenn nach einem weiteren Merkmal der Erfindung vorgesehen ist, dass die Koppelstange und/oder die Schubstange mindestens an einem ihrer Enden mit einem Gewinde zur Veränderung der Koppelstangen- und/oder Schubstangenlänge zu versehen ist, so lässt sich das mit einer rohrförmigen Koppelstange oder Schubstange einfach dadurch erreichen, dass in die Enden oder auf die Enden Augen ein- oder aufgeschraubt werden, die die Zapfen oder Lager tragen. Das Gewinde ermöglicht eine stufenlose Verlängerung oder Verkürzung der Koppelstange bzw. der Schubstange, wodurch die Synchronisation der Hubantriebe hergestellt werden kann bzw. die exakte Einstellung der Schubkurbel ermöglicht wird.

Eine besonders einfache Lösung ergibt sich, wenn erfindungsgemäß die Koppelstange und/oder die Schubstange aus einem Gewindestab gebildet werden. Gewindestäbe sind im Handel erhältlich, Aufschraubenden ebenfalls, so dass eine preiswerte aber wirkungsvolle Verstellung der Längen von Koppelstange bzw. Schubstange ermöglicht wird.

Um den Hubantrieb von hohen Reibkräften im Bereich der Hubglieder zu entlasten und die Antriebe zu schonen wird nach einen ergänzenden Merkmal der Erfindung vorgeschlagen, dass die Hubglieder Zapfen aufweisen, auf denen frei drehbare Rollen gelagert sind, die die Auflagen für den Hubrahmen bilden.

Der Antriebsmotor kann erfindungsgemäß aus Maschinensicherheitsgründen sowohl reversierbar wie auch nicht reversierbar betreibbar sein.

Vorteilhafterweise kann der Hubtisch als Rollenbahn, Plattform oder Wartebühnen ausgeführt werden, je nach dem wo und zu welchen Zweck die Erfindung eingesetzt wird.

Mit der vorliegenden Erfindung wird eine Lösung geschaffen, die gegenüber dem Stand der Technik stark vereinfacht ist, deutlich kostengünstiger ist und weitgehend wartungs- und verschleißfrei arbeitet. Die Störanfälligkeit der Anlage wird mit der vorgeschlagenen Lösung nahezu aufgehoben, so dass die erhöhte Verfügbarkeit des Hubtisches auch dessen Einsatz wirtschaftlicher macht.

Ein Ausführungsbeispiel der Erfindung ist in der Zeichnung dargestellt und wird nachfolgend beschrieben. Es zeigt:
- Figur 1: einen erfindungsgemäßen Hubtisch in schematischer perspektivischer Darstellung und
- Figur 2: einen Hubtisch nach dem Stand der Technik.

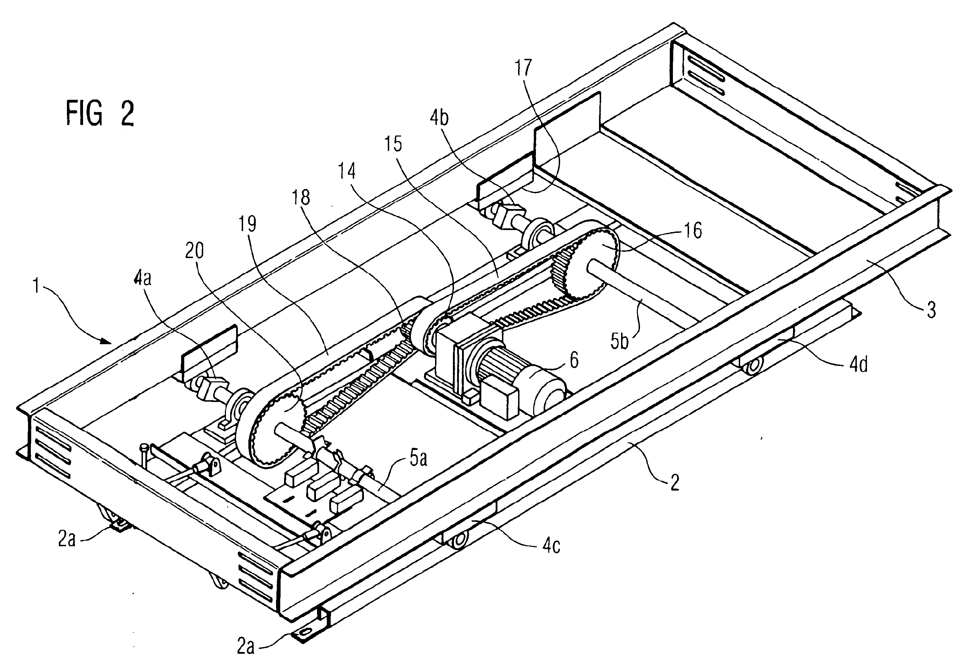

Ein aus dem Stand der Technik bekannter Hubtisch ist in schematischer perspektivischer Darstellung in Figur 2 dargestellt. Der insgesamt mit 1 bezeichnete Hubtisch enthält den am Boden abgestützten Tragrahmen, der bei 2a mit dem Flur verschraubt werden kann. An diesem Tragrahmen 2 ist der parallel zu diesem heb- und senkbar gelagerten Hubrahmen 3 geführt, dessen Hubantrieb aus vier den Hubrahmen 3 symmetrisch untergreifenden, in bekannter Weise exzentrischen Hubgliedern 4a, 4b, 4c und 4d besteht. Diese Hubglieder sind am Tragrahmen um zwei zueinander parallele horizontale Achsen 5a und 5b drehbar gelagert und werden synchron von einen gemeinsamen Antriebsmotor 6 angetrieben. Der Antriebsmotor weist auf seiner Abtriebswelle ein Zahnrad 14 auf, das über den Zahnriemen 15 mit einem auf der Drehachse 5a drehfest angeordneten Zahnrad 16 kämmt und beim Drehen des Motors in der einen oder anderen Richtung die Drehachse 5b in diesen beiden Drehrichtungen antreibt. Dadurch werden die beiden auf der Drehachse 5b drehfest angeordneten Hubglieder 4b und 4d verdreht, wobei ein exzentrisch, in paralleler Erstreckung zur Drehachse 5b gelagerter Zapfen an jedem der Hubglieder Auflage 17 an der Unterseite des Hubrahmens 3 untergreift und den Hubrahmen anhebt oder absenkt. Da gleichartige Hubglieder jeweils an beiden Enden der Drehachsen 5a und 5b angeordnet sind und synchron über die Verdrehung der Drehachsen 5a und 5b bewegt werden, wird die Drehbewegung der Drehachsen 5a und 5b über die exzentrischen, an den Hubgliedern angeordneten Zapfen in die gewünschte Hubbewegung umgesetzt. Damit alle vier Hubglieder 4a - 4d synchron und gleichzeitig auf- und ab bewegt werden, ist auf der Verlängerung der Motorwelle des Motors 6 ein zweites Zahnrad 18 angeordnet, das über den Zahnriemen 19 mit dem Zahnrad 20 auf der Drehachse 5a kämmt und bei identischen Abmessungen der Zahnradpaarungen 14 und 16, 18 und 20 eine synchrone Drehung der Drehachsen 5a, 5b und damit Bewegung der Hubglieder 4a - 4d bewirkt.

Nachteilig bei diesem Antrieb ist die Notwendigkeit, aufwendig hergestellte Zahnräder 14, 16, 18, 20 verwenden zu müssen, ebenso die Verwendung stark verschleißender Zahnriemen, deren Auswechselung bei Verschleiß oder Zerstörung problematisch ist und den Ausbau wichtiger Vorrichtungsteile erfordert, was bei Reparaturen hohe Stillstandzeiten beansprucht.

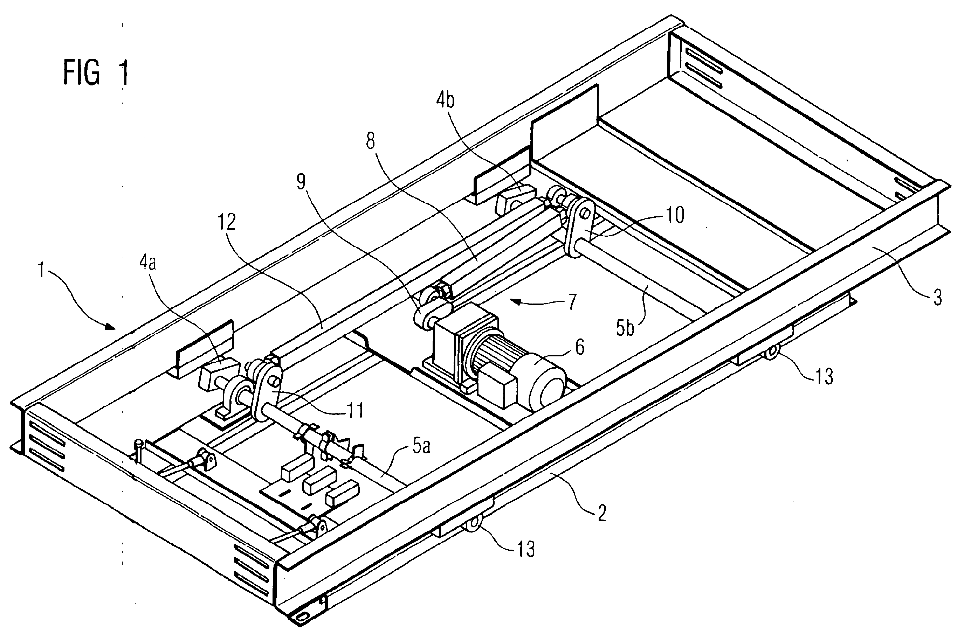

Diese Problematik tritt bei der vorliegenden Erfindung nicht auf. Die Erfindung ist in der Zeichnungsfigur 1, ebenfalls schematisch und perspektivisch, dargestellt ist. In der Figur 1 sind gleiche Teile gleich bezeichnet. Anders als beim Stand der Technik trägt die Abtriebswelle des Motors 6 eine mit der Motorwelle umlaufende Kurbel 9, auf der das eine Ende einer Schubkurbel 8 drehbar gelagert ist, deren anderes Ende an einem Hebel 10, ebenfalls drehbar, gelagert ist, der seinerseits fest auf der Drehachse 5b für die Hubglieder 4b und 4d befestigt ist. Beim Drehen des Motors 6 bewegt die Kurbel 9 die Schubkurbel 8 quer zur Drehachse 5b und verschwenkt dabei den Hebel 10 maximal um den Kurbelhub der Kurbel 9. Dadurch wird der Hebel 10 hin- und herbewegt, wodurch die Drehachse 5b mit den darauf befestigten Hubgliedern 4b und 4d ebenfalls eine Hin- und Herbewegung ausführt, durch die der Hubrahmen 3 über die Zapfen 13 an den Hubgliedern 4b und 4d angehoben und gesenkt wird. Um auch bei dieser erfindungsgemäßen Vorrichtung eine Synchronisation aller Hubglieder 4a - 4d an beiden Drehachsen 5a und 5b zu erzielen, sitzt auf dem die Schubkurbel 8 mit dem Hebel 10 verbindenden Zapfen in dessen Verlängerung das Ende einer Kurbelstange 12, deren anderes Ende mit einem dem Hebel 10 auf der Drehachse 5b entsprechenden Hebel 11 auf der Drehachse 5a verbunden ist. Dieser ebenfalls drehfest auf der Drehachse 5a angeordneten Hebel ist vorzugsweise symmetrisch und gleich dimensioniert, wie der Hebel 10. Dadurch bewegt sich, sobald der Hebel 10 auf der Drehachse 5b von der Schubkurbel 8 in Bewegung gesetzt wird, über die verbindende Koppelstange 12 auch der Hebel 11 und verdreht die Drehachse 5a um den gleichen Verdrehwinkel, wie die Drehachse 5b. Über auf den Zapfen 13 angeordneten freilaufende Tragrollen (nicht dargestellt) wird die Exenterbewegung der Hubglieder 4a - 4d auf die Auflagen 17 an der Unterseite des Hubrahmens übertragen. Im Ergebnis führt der in Quer- und Längsrichtung gegenüber dem Tragrahmen 2 festgelegte Hubrahmen eine aufgezwungene Hub- und Senkbewegung in vertikaler Richtung aus und kann somit die eingangs beschriebene Aufgabe des Hubtisches in funktionssicherer Weise erfüllen.

## Patentansprüche

1. Hubtisch (1) in Förderstraßen für Transporteinrichtungen wie Skids, Paletten, Palettenboxen oder dergleichen Lasten, bestehend aus einem horizontalen am Boden abstützbaren Tragrahmen (2) und einem an diesem Tragrahmen (2) parallel zu diesem heb- und senkbar gelagerten Hubrahmen (3), dessen Hubantrieb aus den Hubrahmen (3) symmetrisch untergreifenden Hubgliedern (4a-d) besteht, die am Tragrahmen (2) um horizontale Achsen drehbar gelagert sind und synchron von einen gemeinsamen Antriebsmotor (6) drehangetrieben werden, so dass die an jedem Hubglied (4a-d) exzentrisch angeordneten Auflagen für den Hubrahmen (3) zwischen einer tiefsten Stellung in eine höchste Stellung verschwenkbar sind und dabei den Hubrahmen (3) parallel zum Tragrahmen (2) heben und senken, wobei jeweils zwei beidseitig der Längsachse am Hubtisch (1) angreifende Hubglieder (4b, 4d) auf einer von zwei parallelen Drehachse (5a, 5b) befestigt sind,**dadurch gekennzeichnet, dass** auf jeder Drehachse (5a,5b) ein Habel (10,11) befestigt ist, wobei die Hebel (10, 11) zur Synchronisation der Hubbewegung des Hubrahmens (3) über eine Koppelstange (12) miteinander verbunden sind, und dass der Drehantrieb für die Hubglieder als Schubkurbeltrieb (8,9,12) ausgebildet ist, wobei eine Schubkurbel (8) einerseits an einer auf der Motorwelle des Antriebsmotors (6) umlaufenden Kurbel (9) und andererseits an einem der Hebel (10) gelagert ist. ,

2. Hubtisch nach Anspruch 1, **dadurch gekennzeichnet, dass** einer der Hebel (10) sowohl die Schubkurbel (8) als auch das einen Ende der Koppelstange (12) lagert.

3. Hubtisch nach Anspruch 2, **dadurch gekennzeichnet, dass** die Koppelstange (12) und/oder die Schubstange (8) als Rohr ausgebildet ist.

4. Hubtisch nach Anspruch 2, **dadurch gekennzeichnet, dass** die Koppelstange (12) und/oder die Schubstange (8) mindestens an einem ihrer Enden mit einem Gewinde zur Veränderung der Koppelstangen- und/oder Schubstangenlänge versehen ist.

5. Hubtisch nach Anspruch 2, **dadurch gekennzeichnet, dass** die Koppelstange (12) und/oder die Schubstange (8)aus einem Gewindestab gebildet werden.

6. Hubtisch nach einem der Ansprüche 1 bis 5, **dadurch gekennzeichnet, dass** die Hubglieder (4a-d) Zapfen (13) aufweisen, auf denen frei drehbare Rollen gelagert sind, die die Auflagen für den Hubrahmen (3) bilden.

7. Hubtisch nach Anspruch 1, **dadurch gekennzeichnet, dass** der Antriebsmotor (6) sowohl reversierbar wie auch nicht reversierbar betreibbar ist.

8. Hubtisch nach einem der Ansprüche 1 bis 7, **dadurch gekennzeichnet, dass** der Hubtisch (1) als Rollenbahn, Plattform oder Wartebühnen ausführbar ist.

## Claims

1. Lifting table (1) in conveyor tracks for transport devices such as skids, pallets, pallet boxes or similar loads, comprising a horizontal supporting frame (2), which can rest on the ground, and a lifting frame (3), which is mounted on this supporting frame (2) such that it can be raised and lowered parallel thereto and the lifting drive of which comprises lifting elements (4a-d) which symmetrically undergrip the lifting frame (3) and which are mounted on the supporting frame (2) rotatably about horizontal axles and are synchronously rotary driven by a common drive motor (6), so that the rests for the lifting frame (3), which are eccentrically disposed on each lifting element (4a-d), can be swivelled between a lowest setting and a highest setting and thereupon raise and lower the lifting frame (3) parallel to the supporting frame (2), two lifting elements (4b, 4d), which on both sides of the longitudinal axis act upon the lifting table (1), respectively being fastened on one of two parallel rotary axles (5a, 5b), **characterized in that** on each rotary axle (5a, 5b) a lever (10, 11) is fastened, the levers (10, 11), in order to synchronize the lifting motion of the lifting frame (3), being mutually connected by a coupling rod (12), and **in that** the rotary drive for the lifting elements is configured as a slider-crank mechanism (8, 9, 12), a slider crank (8) being mounted, on the one hand, on a crank (9) revolving on the motor shaft of the drive motor (6) and, on the other hand, on one of the levers (10).

2. Lifting table according to Claim 1, **characterized in that** one of the levers (10) supports both the slider crank (8) and one end of the coupling rod (12).

3. Lifting table according to Claim 2, **characterized in that** the coupling rod (12) and/or the slider rod (8) is/are configured as a tube.

4. Lifting table according to Claim 2, **characterized in that** the coupling rod (12) and/or the slider rod (8) is/are threaded at least at one of its ends in order to change the coupling rod and/or slider rod length.

5. Lifting table according to Claim 2, **characterized in that** the coupling rod (12) and/or the slider rod (8) is/are formed from a threaded rod.

6. Lifting table according to one of Claims 1 to 5, **characterized in that** the lifting elements (4a-d) have journals (13) on which are mounted freely rotatable rollers which form the rests for the lifting frame (3).

7. Lifting table according to Claim 1, **characterized in that** the drive motor (6) can be operated both reversibly and non-reversibly.

8. Lifting table according to one of Claims 1 to 7, **characterized in that** the lifting table (1) can be realized as a roller conveyor, a platform or waiting platforms.

## Revendications

1. Table (1) élévatrice dans des voies de transport pour des dispositifs de transport comme des patins, des palettes, des palettes caisses ou des charges analogues, constituée d'un cadre support (2) horizontal pouvant prendre appui sur le sol et d'un cadre (3) élévateur qui est monté parallèlement au cadre (2) support, qui peut se soulever et s'abaisser par rapport à celui-ci et dont le dispositif d'entraînement en élévation est constitué d'organes (4a à 4d) élévateurs qui prennent par en dessous symétriquement le cadre (3) élévateur, qui sont montés tournants autour d'axes horizontaux sur le cadre (2) support et qui sont entraînés en rotation en synchronisme par un moteur (6) d'entraînement commun, de sorte que les appuis, disposés de manière excentrée sur chaque organe (4a à 4d) de levage, pour le cadre (3) élévateur, peuvent basculer entre une position très basse et une position très haute et soulever ainsi le cadre (3) élévateur parallèlement au cadre (2) support et l'abaisser, dans lequel respectivement deux organes (4b, 4d) attaquant des deux côtés de l'axe longitudinal la table (1) élévatrice sont fixés sur l'un de deux axes (5a, 5b) de rotation parallèles, **caractérisée en ce qu'**un levier (10, 11) est fixé sur chaque axe (5a, 5b) de rotation, les leviers (10, 11) étant pour la synchronisation du mouvement d'élévation du cadre (3) élévateur reliés entre eux par une barre (12) d'accouplement, et **en ce que** l'entraînement en rotation des organes de levage est constitué sous la forme d'un mécanisme (8, 9, 12) bielle-manivelle, une bielle (8) étant montée, d'une part, sur une manivelle (9) entourant l'arbre du moteur (6) d'entraînement et, d'autre part, sur l'un des leviers (10).

2. Table élévatrice suivant la revendication 1, **caractérisée en ce que** l'un des leviers (10) sert de palier tant à la bielle (8) qu'à une extrémité de la barre (12) d'accouplement.

3. Table élévatrice suivant la revendication 2, **caractérisée en ce que** la barre (12) d'accouplement et/ou la bielle (8) sont tubulaires.

4. Table élévatrice suivant la revendication 2, **caractérisée en ce que** la barre (12) d'accouplement et/ou la bielle (8) sont munies au moins à l'une de leurs extrémités d'un filetage pour modifier la longueur de la barre d'accouplement et/ou de la bielle.

5. Table élévatrice suivant la revendication 2, **caractérisée en ce que** la barre (12) d'accouplement et/ou la bielle (8) sont constituées d'un barreau fileté.

6. Table élévatrice suivant l'une des revendications 1 à 5, **caractérisée en ce que** les organes (4a à 4d) de levage comportent des tourillons (13) sur lesquels sont montés des galets fous qui forment les supports pour le cadre (3) élévateur.

7. Table élévatrice suivant la revendication 1, **caractérisée en ce que** le moteur (6) d'entraînement peut fonctionner tant de manière réversible que de manière non réversible.

8. Table élévatrice suivant l'une des revendications 1 à 7, **caractérisée en ce que** la table (1) élévatrice est réalisée sous la forme d'un transport à rouleaux, d'une plate-forme ou d'une plate-forme d'entretien.
